# EUROPÄISCHE PATENTSCHRIFT

(11) **EP 2 393 175 B1**
(45) Veröffentlichungstag und Bekanntmachung des Hinweises auf die Patenterteilung: **23.01.2013**
(21) Anmeldenummer: 10164759.2
(22) Anmeldetag: 02.06.2010
(51) Int. Cl.: H02G 3/14, H01R 13/46, G09F 3/20

(54) **Beschriftungsträger für ein Elektro-Installationsgerät**
Label holder for an electric installation device
Support d'écriture pour un appareil d'installation électrique

(43) Veröffentlichungstag der Anmeldung: 07.12.2011
(73) Patentinhaber: GIRA GIERSIEPEN GmbH & Co. KG, 42477 Radevormwald (DE)
(72) Erfinder: Lankuttis, Klaus, 51465, Bergisch Gladbach (DE)
(74) Vertreter: Patentanwälte Dr. Solf & Zapf

(56) Entgegenhaltungen:
- EP-A1- 1 347 551
- EP-A1- 1 376 802
- DE-A1- 4 311 137

## Beschreibung

Die vorliegende Erfindung betrifft gemäß dem Oberbegriff des Anspruchs 1 einen Beschriftungsträger zur Anordnung zwischen einem Unterputz-Geräteeinsatz und einem Sichtfenster eines Wand-Abdeckrahmens eines Elektro-Installationsgerätes, bestehend aus einem Basisabschnitt zur Befestigung an dem Geräteeinsatz und einem Aufnahmeabschnitt für ein flächiges Beschriftungsschild.

Ferner betrifft die Erfindung auch ein mit einem solchen Beschriftungsträger ausgestattetes Elektro-Installationsgerät mit einem als Schalter, Steckdose oder dergleichen ausgebildeten Unterputz-Geräteeinsatz sowie einen Wand-Abdeckrahmen mit einem Sichtfenster und einem diesem zugeordneten Beschriftungsträger.

Das Dokument DE 102 27 562 B4 beschreibt einen Abdeckrahmen für ein elektrisches Installationsgerät, wobei ein Bezeichnungsschildträger als Schildmodul ausgebildet und an dem Abdeckrahmen über eine Rastverbindung befestigt bzw. befestigbar ist. Diese rahmenseitige Befestigung hat den Nachteil, dass nicht das eigentliche Gerät, sondern nur der Rahmen beschriftet ist. Im Falle von Renovierungsarbeiten werden aber in aller Regel die Geräteeinsätze in den jeweiligen UP-Dosen (Unterputz-Dosen) belassen, und nur die vorderen Geräte-Aufsatzteile, wie Schaltwippen, Steckdosen (so genannte Schuko-Töpfe) und dergleichen, werden zusammen mit den auf der jeweiligen Wandfläche montierten Abdeckrahmen demontiert. Deshalb kann es nach der Renovierung zu Vertauschungen der Rahmen und somit auch der zugehörigen Beschriftungen kommen, so dass dann die Geräte nicht mehr korrekt beschriftet sind.

Es ist daher auch bereits eine Möglichkeit für eine gerätespezifische Beschriftung bekannt, wobei ein Beschriftungsträger der gattungsgemäßen Art an dem Geräteeinsatz befestigt, und zwar insbesondere auf ein zur Auflage auf der die jeweilige UP-Dose umgebenden Wandfläche vorgesehenes Tragelement, einen so genannten Tragring, aufgeklebt wird. Dadurch verbleibt nach Demontage der Geräte-Aufsatzteile und des Abdeckrahmens die Beschriftung am jeweiligen Geräteeinsatz, so dass Vertauschungen ausgeschlossen sind. Der Rahmen weist hierbei nur ein entsprechendes Sichtfenster in dem den Beschriftungsträger überdeckenden Bereich auf. Diese (durch Vorbenutzung) bekannte Ausführung hat allerdings noch bestimmte Nachteile.

Ein erster Nachteil steht im Zusammenhang damit, dass nach häufigen Renovierungen durch Übertapezieren eine Änderung des Auflage-Niveaus für den Abdeckrahmen auftreten kann, so dass sich auch der Abstand des Rahmens von dem in der ursprünglichen Position in der UP-Dose montierten Geräteeinsatz und auch von dem am Tragelement des Einsatzes befestigten Beschriftungsträger ändert. Dies beeinträchtigt die Lesbarkeit der jeweiligen Beschriftung des in dem Beschriftungsträger befindlichen Beschriftungsschildes, weil zwischen letzterem und dem Rahmen-Sichtfenster ein gegebenenfalls zu großer Abstand entsteht. Es wäre zwar möglich, den Beschriftungsträger von vorneherein für einen vergrößerten Abstand auszulegen, allerdings würde dann - bei korrekter ursprünglicher Montage des Geräteeinsatzes in einer optimal bis zur Wandauflage des Tragelementes in die UP-Dose versenkten Position und insbesondere in Fällen, in denen der Einsatz nicht ganz vollständig versenkt werden kann (z. B. bei Montage in Metall-Hohlwänden, wenn eine Hohlwand-Dose gegebenenfalls nicht optimal versenkt werden kann), so dass das Tragelement nicht ganz auf der Wandfläche aufliegt - der Beschriftungsträger derart als Abstandhalter wirken, dass der Abdeckrahmen nicht mehr korrekt bis zu seiner randlichen Wandauflage montiert werden könnte.

Ein weiterer Nachteil des bekannten Beschriftungsträgers tritt besonders in Einsatzbereichen auf, in denen es durch häufige Reinigungs- bzw. Desinfizierungsarbeiten zu einem Eindringen von Feuchtigkeit bzw. Flüssigkeit in den Bereich des Beschriftungsträgers kommen kann. Dies ist beispielsweise in Krankenhäusern aus hygienischen Gründen der Fall. Da der Beschriftungsträger einen relativ engen, schlitzartigen Aufnahmeraum für das Beschriftungsschild aufweist, kann die eindringende Feuchtigkeit nur sehr schlecht abtrocknen. Zudem kommt es sogar durch eine Kapillarwirkung zu einem verstärkten Eindringen von Feuchtigkeit über die gesamte Beschriftungsfläche, was insbesondere bei aus Papier bestehenden Schildchen sehr nachteilig ist, weil die Qualität und Lesbarkeit der Beschriftung durch die ständige Durchfeuchtung beeinträchtigt wird.

Der vorliegenden Erfindung liegt die Aufgabe zu Grunde, einen Beschriftungsträger der beschriebenen Art so zu verbessern, dass die Lesbarkeit der Beschriftung weitgehend unabhängig von unterschiedlichen Montagesituationen sowie insbesondere auch in Fällen von eindringender Feuchtigkeit stets über lange Zeit hinweg optimal ist.

Erfindungsgemäß wird dies durch die Merkmale des unabhängigen Anspruchs 1 bzw. des Anspruchs 11 erreicht. Vorteilhafte Ausgestaltungen der Erfindung sind in den jeweils abhängigen Ansprüchen 2 bis 13 sowie auch in der anschließenden Beschreibung enthalten. Zudem ist ein Elektro-Installationsgerät mit einem erfindungsgemäßen Beschriftungsträger Gegenstand des Anspruchs 14 und ein Abdeckrahmen ist Gegenstand des Anspruchs 15.

Gemäß einem ersten Erfindungsaspekt ist demnach der Aufnahmeabschnitt des Beschriftungsträgers mit dem Basisabschnitt derart über einen federelastischen Verbindungsabschnitt verbunden, dass der Aufnahmeabschnitt aus einer entspannten Ausgangsstellung heraus gegen eine Federkraft in Richtung des Verbindungsabschnittes bewegbar ist. Indem hierbei die entspannte Ausgangsstellung für einen maximal zu erwartenden bzw. maximal zulässigen Abstand zwischen dem Sichtfenster des Abdeckrahmens und dem Geräteeinsatz ausgelegt ist, kann der Abdeckrahmen stets optimal bis zu seiner randlichen Wandauflage montiert werden, weil sich der im Rahmen-Sichtfenster anliegende Aufnahmeabschnitt mit dem Beschriftungsschild bei der Montage des Abdeckrahmens zusammen mit diesem elastisch in Richtung des Basisabschnitts bewegen lässt. Demzufolge wird in der Praxis ein selbsttätiger so genannter "Tapetenausgleich" gewährleistet, indem unabhängig von der jeweiligen relativen Montagestellung zwischen Geräteeinsatz und Abdeckrahmen das Beschriftungsschild in dem Aufnahmeabschnitt des erfindungsgemäßen Beschriftungsträgers stets in einer optimalen Stellung relativ zu dem Sichtfenster des Abdeckrahmens angeordnet ist. Dazu ist der gesamte Verformungsbereich des erfindungsgemäßen Beschriftungsträgers bezüglich seiner ganz zusammengedrückten Stellung für einen minimalen Abstand zwischen dem Rahmen-Sichtfenster und dem Geräteeinsatz ausgelegt. Wenn beispielsweise der Geräteeinsatz optimal versenkt in einer UP-Dose montiert ist und die umliegende Wandfläche zumindest annähernd in einer Ebene mit dem Tragelement liegt oder wenn sogar der Geräteeinsatz in bestimmten Montagesituationen nicht ganz versenkt in der UP-Dose angeordnet werden kann, muss dennoch der Abdeckrahmen mit seinem Außenrand zur Auflage auf der Wandfläche kommen können. Deshalb muss der Abdeckrahmen entsprechend mit geringem Abstand vom Geräteeinsatz montiert werden, so dass dann der Aufnahmeabschnitt des Beschriftungsträgers unter elastischer Verformung des Verbindungsbereiches entsprechend weit in Richtung zum Basisabschnitt hin gedrückt wird.

In einem zweiten Erfindungsaspekt weist der Aufnahmeabschnitt des Beschriftungsträgers eine in Richtung des Basisabschnittes überwiegend offene Schildaufnahme auf, wobei sich der Begriff "überwiegend" insbesondere auf die Gesamtlänge des Beschriftungsschildes bezieht. Vorzugsweise weist die Schildaufnahme nur relativ kurze seitliche Haltebereiche für Endbereiche des Beschriftungsschildes und vorzugsweise mindestens ein mittiges Sicherungselement zum Abstützen des Beschriftungsschildes gegen gravitationsbedingtes Herausfallen aus der Schildaufnahme auf. Durch diese erfindungsgemäße Ausführung wird einerseits eine Kapillarwirkung weitgehend vermieden, und andererseits kann eine eventuell dennoch eindringende Feuchtigkeit gut und schnell wieder abtrocknen, so dass die Qualität und Lesbarkeit des Beschriftungsschildes über lange Zeit hinweg erhalten bleibt.

Es sei an dieser Stelle betont, dass der Gegenstand des Anspruchs 1 und der Gegenstand des Anspruchs 11 in Kombination miteinander, aber grundsätzlich auch unabhängig voneinander vorgesehen sein können. Die Gegenstände sind aber dennoch einheitlich, weil es sich um zwei alternative Lösungen für die gleiche Aufgabe - Gewährleistung einer stets optimalen Lesbarkeit der Beschriftung - handelt.

Anhand von zwei bevorzugten, in der Zeichnung veranschaulichten Ausführungsbeispielen soll die Erfindung genauer erläutert werden. Es zeigen:
- Fig. 1: eine Draufsicht auf die Vorderseite der für die Erfindung wesentlichen Bestandteile eines Elektro-Installationsgerätes in einer ersten Ausführung,
- Fig. 2: einen Längsschnitt in der Ebene II-II gemäß Fig. 1,
- Fig. 3: einen Querschnitt in der Ebene III-III gemäß Fig. 1,
- Fig. 4: eine Ausschnittvergrößerung des Bereiches IV in Fig. 2,
- Fig. 5: eine perspektivische Explosionsdarstellung der wesentlichen Bestandteile in der Ausführung gemäß Fig. 1 bis 4,
- Fig. 6: Perspektivansichten eines erfindungsgemäßen Beschriftungsträgers in einer ersten Ausführungsform, und zwar Fig. 6a in einer entspannten Ausgangsposition und Fig. 6b in einer elastisch zusammengedrückten Position,
- Fig. 7a: eine Ansicht in Pfeilrichtung VII gemäß Fig. 6a,
- Fig. 7b: eine entsprechende Ansicht in Pfeilrichtung VII gemäß Fig. 6b,
- Fig. 8a: eine Seitenansicht in Pfeilrichtung VIII gemäß Fig. 7a,
- Fig. 8b: eine entsprechende Seitenansicht in Pfeilrichtung VIII gemäß Fig. 7b,
- Fig. 9a: eine Ansicht in Pfeilrichtung IX gemäß Fig. 6a,
- Fig. 9b: eine entsprechende Ansicht in Pfeilrichtung IX gemäß Fig. 6b,
- Fig. 10: eine Ansicht analog zu Fig. 1 einer zweiten Ausführungsform,
- Fig. 11: einen Längsschnitt in der Ebene XI-XI gemäß Fig. 10,
- Fig. 12: einen Querschnitt in der Ebene XII-XII gemäß Fig. 10,
- Fig. 13: eine Ausschnittvergrößerung des Bereiches XIII in Fig. 11 analog zu Fig. 4,
- Fig. 14a, b: Perspektivansichten des erfindungsgemäßen Beschriftungsträgers in der zweiten Ausführungsform gemäß Fig. 10 bis 13 analog zu Fig. 6 in entspannter bzw. zusammengedrückter Position,
- Fig. 15a, b: Ansichten des Beschriftungsträgers gemäß Fig. 14 analog zu den Darstellungen in Fig. 7,
- Fig. 16a, b: Darstellungen analog zu Fig. 8 und
- Fig. 17a, b: weitere Darstellungen analog zu Fig. 9.

In den verschiedenen Figuren der Zeichnung sind gleiche Teile stets mit den gleichen Bezugszeichen versehen.

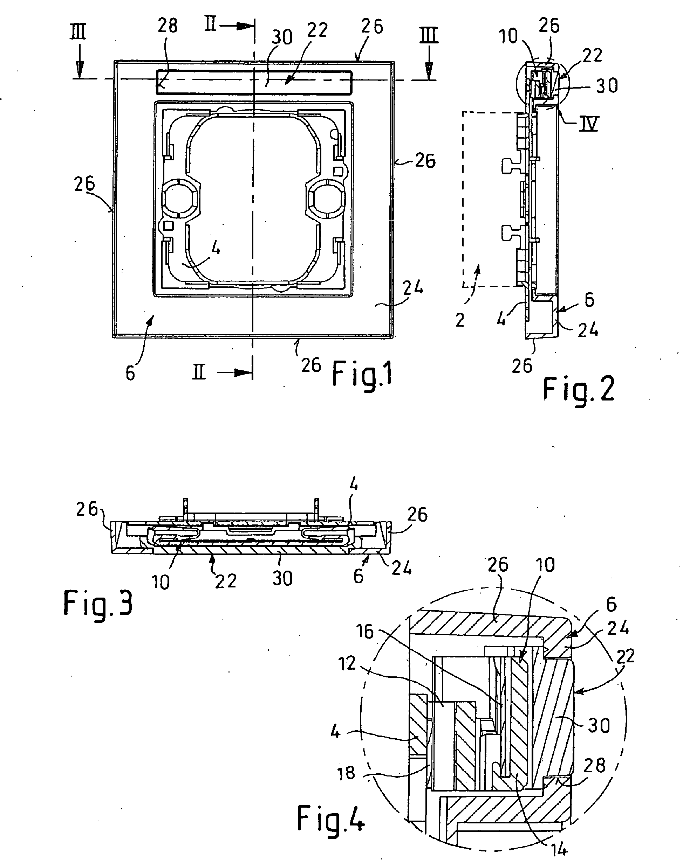

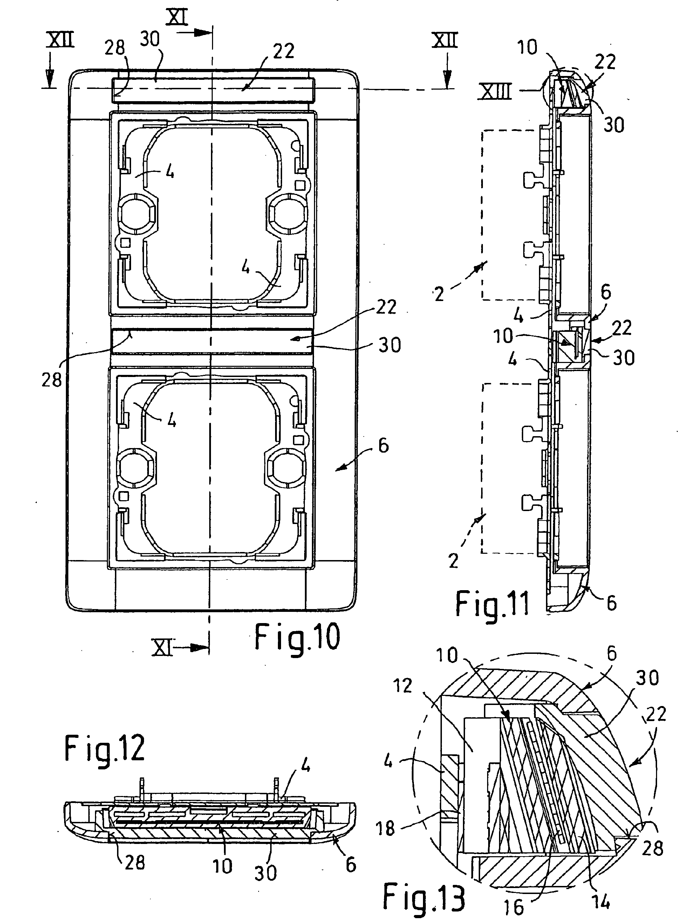

In den Zeichnungen - siehe Fig. 1 bis 5 einerseits und Fig. 10 bis 13 andererseits - sind von einem Elektro-Installationsgerät nur die für die vorliegende Erfindung wesentlichen Bestandteile dargestellt. So weist das Elektro-Installationsgerät einen Unterputz-Geräteeinsatz 2 auf, der nur in Fig. 2 und 11 jeweils stark schematisch und gestrichelt angedeutet ist. Zudem weist das Installationsgerät ein mit dem Geräteeinsatz 2 verbundenes Tragelement 4 auf, welches rahmen- oder plattenartig ausgebildet ist und den Geräteeinsatz 2 seitlich überragt. Der Geräteeinsatz 2 wird in eine nicht dargestellte UP-Dose (Unterputz-Dose) eingesetzt, wobei das Tragelement 4 zur Auflage auf einer die UP-Dose umschließenden Montagefläche (Wandfläche) sowie zur Befestigung des Einsatzes 2 in der Dose vorgesehen ist. Das Tragelement 4 wird häufig auch als "Tragring" bezeichnet, und es besteht zumeist aus Metall oder aber aus Kunststoff.

Der Geräteeinsatz 2 kann beispielsweise als Schalter, als Steckdose oder als sonstiges Gerät der üblichen Gebäude-Elektroinstallationstechnik ausgebildet sein. Der Geräteeinsatz 2 wird dazu mit nicht dargestellten, der jeweiligen Funktion entsprechenden Aufsatzteilen versehen, wie beispielsweise mindestens einer Schaltwippe, einem Steckdosen-Zentraleinsatz (so genannter Schuko-Topf) oder dergleichen.

Weiterhin ist ein Abdeckrahmen 6 vorgesehen, der den Übergangsbereich des Geräteeinsatzes 2 zur angrenzenden Wandfläche hin abdeckt.

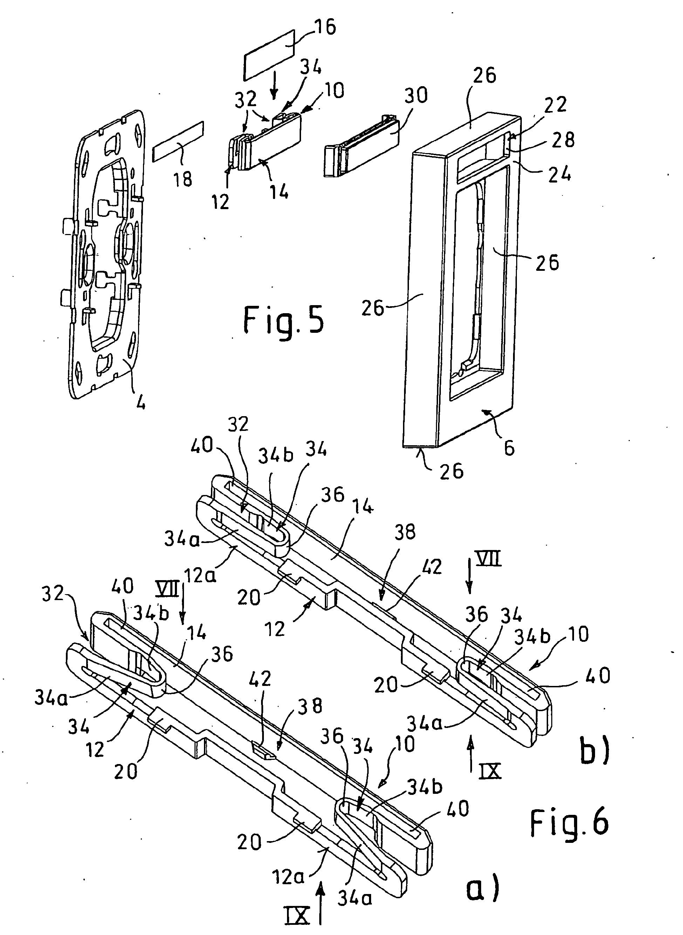

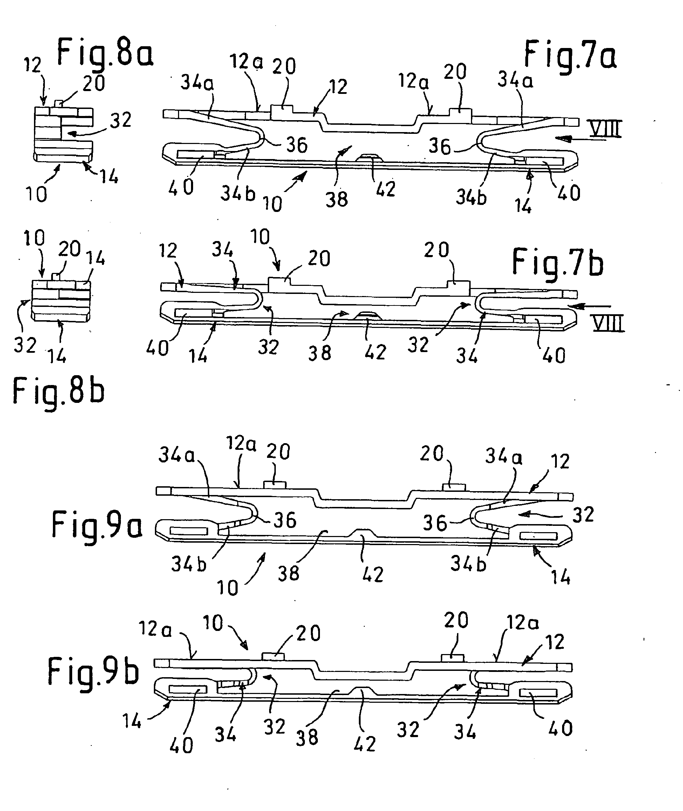

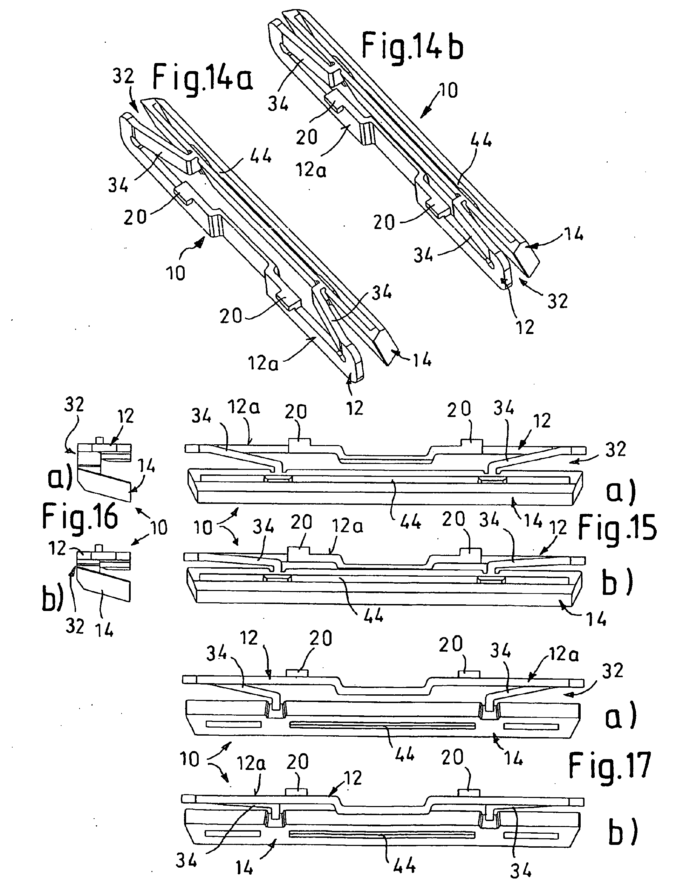

Im Bereich zwischen dem Geräteeinsatz 2 und dem Abdeckrahmen 6 ist nun weiterhin ein Beschriftungsträger 10 angeordnet, der gesondert und vergrößert in einer ersten Ausführung in den Fig. 6 bis 9 und in einer zweiten Ausführung in den Fig. 14 bis 17 dargestellt ist. Demnach besteht der Beschriftungsträger 10 aus einem Basisabschnitt 12 zur Befestigung an dem Geräteeinsatz 2 und einem Aufnahmeabschnitt 14 für ein flächiges Beschriftungsschild 16 (siehe dazu insbesondere Fig. 5 sowie auch die vergrößerten Detailansichten in Fig. 4 und 13).

Der Beschriftungsträger 10 wird bevorzugt in einem Randbereich des Tragelementes 4 befestigt, insbesondere über einen beidseitig selbstklebenden Klebestreifen 18 (siehe Fig. 5 sowie auch die Ausschnittvergrößerungen in Fig. 4 und 13) aufgeklebt. Zweckmäßigerweise wird dazu der Klebestreifen 18 zunächst auf den Basisabschnitt 12 des Beschriftungsträgers 10 aufgeklebt und zwar auf eine von dem Aufnahmeabschnitt 14 wegweisende Montagefläche 12a des Basisabschnitts 12, wobei die andere Seite des Klebestreifens 18 noch mit einer Schutzfolie abgedeckt ist. Unmittelbar vor dem Befestigen des Beschriftungsträgers 10 kann diese Schutzfolie abgezogen und der Beschriftungsträger 10 mit seinem Basisabschnitt 12 auf das Tragelement 4 aufgeklebt werden. Zur lagerichtigen Ausrichtung des Beschriftungsträgers 10 relativ zu dem Geräteeinsatz 2 und dem Tragelement 4 sind geeignete Positioniermittel vorgesehen, insbesondere in Form von Positionieransätzen 20 des Basisabschnitts 12, wobei die Positionieransätze 20 in eine entsprechende Aufnahmekontur des Tragelementes 4 eingreifen.

Der Abdeckrahmen 6 weist in einem den Bereich des montierten Beschriftungsträgers 10 im montierten Zustand überdeckenden Bereich ein Sichtfenster 22 auf (siehe Fig. 1 bis 4 sowie Fig. 10 bis 13). Der Abdeckrahmen 6 ist dazu kappenartig mit einem der Montageseite und dem Geräteeinsatz 2 zugewandten Hohlraum ausgebildet und besteht aus einer vorderen Wandung 24 und aus Seitenwandungen 26, die sich am Rahmen-Außenrand ausgehend von der vorderen Wandung 24 in Richtung der Montageseite erstrecken und im montierten Zustand auf der Montagefläche bzw. auf der Wandfläche aufliegen sollten. Im Bereich des Sichtfensters 22 weist die vordere Wandung 24 eine längliche, insbesondere lang gestreckt rechteckige Öffnung 28 auf, in die ein aus transparentem Material bestehender Fenstereinsatz 30 eingesetzt ist. Dazu wird insbesondere auf die Explosionsdarstellung in Fig. 5 verwiesen. Der Fenstereinsatz 30 kann auf geeignete Weise innerhalb der Öffnung 28 befestigt sein. Bevorzugt wird er stoffschlüssig mit dem Abdeckrahmen 6 verbunden, insbesondere eingeklebt, er kann aber auch mechanisch beispielsweise über eine Rastverbindung gehalten sein.

Erfindungsgemäß ist nun der Aufnahmeabschnitt 14 des Beschriftungsträgers 10 mit dem Basisabschnitt 12 derart über einen federelastischen Verbindungsabschnitt 32 verbunden, dass der Aufnahmeabschnitt 14 aus einer entspannten Ausgangsstellung (vergleiche dazu die Darstellungen in Fig. 6a, 7a und 9a sowie in Fig. 14a, 15a und 17a) gegen eine Federkraft (Rückstellkraft) in Richtung des Basisabschnitts 12 bewegbar ist. Somit kann der erfindungsgemäße Beschriftungsträger 10 insgesamt elastisch zusammengedrückt werden (siehe dazu jeweils die Abbildung b in den Fig. 6 bis 9 und den Fig. 14 bis 17). Die entspannte Ausgangsstellung ist dabei für einen in der Praxis maximal zu erwartenden bzw. als maximal zulässig vorgegebenen Abstand zwischen dem Sichtfenster 22 des Abdeckrahmens 6 und dem Geräteeinsatz 2 bzw. dem Tragelement 4 ausgelegt. Zudem ist der elastische Verformungsbereich hinsichtlich der zusammengedrückten Stellung so ausgelegt, dass in der Praxis in jedem Fall eine Montage des Abdeckrahmens 6 mit Anlage der Seitenwandungen 26 an der den Geräteeinsatz 2 und das Tragelement 4 umschließenden Wandfläche möglich ist. Erfindungsgemäß passt sich der Beschriftungsträger 10 somit selbsttätig an unterschiedliche Montagesituationen des Abdeckrahmens 6 relativ zu dem Geräteeinsatz 2 und dem Tragelement 4 an. Dadurch befindet sich der Aufnahmeabschnitt 14 mit dem Beschriftungsschild 16 stets in einem genau definierten Abstand innen vor dem Sichtfenster 22, wobei der Aufnahmeabschnitt 14 direkt an dem Fenstereinsatz 30 anliegen oder von diesem definiert beabstandet sein kann (vergleiche Fig. 4 und 13).

In den dargestellten, bevorzugten Ausführungen ist der Beschriftungsträger 10 als einstückiges Kunststoff-Formteil ausgebildet. Somit geht der Basisabschnitt 12 über den Verbindungsabschnitt 32 einstückig in den Aufnahmeabschnitt 14 über. Der Beschriftungsträger 10 besteht gänzlich oder zumindest im Bereich einer vorderen Sichtwandung des Aufnahmeabschnitts 14 aus einem transparenten Kunststoff. Es ist auch eine Ausgestaltung als Mehrkomponenten-Formteil möglich, um insbesondere die Federelastizität des Verbindungsabschnitts 32 optimieren zu können.

In den dargestellten Ausführungen besteht der Verbindungsabschnitt 32 aus zwei elastisch verformbaren Federarmen 34, die jeweils als Biegefedern ausgebildet und in gegenüberliegenden Endbereichen der länglichen, streifenartigen Basis- und Aufnahmeabschnitte 12, 14 angeordnet sind. Der Basisabschnitt 12 ist bezüglich seiner Streifenform schmaler als der Aufnahmeabschnitt 14 ausgebildet, wobei die Federarme 34 seitlich versetzt neben dem Basisabschnitt 12 liegen. Dazu wird insbesondere auf die Abbildungen in Fig. 6 und 14 verwiesen.

In der ersten Ausführungsform gemäß Fig. 1 bis 9 ist jeder Federarm 34 mit einem V-oder U-förmigen Verlauf aus zwei über eine Umkehrbiegung 36 verbundenen Armabschnitten 34a und 34b ausgebildet. Die Armabschnitte 34a, b sind mit den Basis- und Aufnahmeabschnitten 12, 14 insbesondere in deren äußeren Endbereichen verbunden, so dass folglich die Umkehrbiegungen 36 aufeinander zu in Richtung einer Trägermitte weisen. Somit ist der Beschriftungsträger 10 nach Art einer Ziehharmonika bzw. eines Faltenbalges verformbar.

Bei der zweiten Ausführung gemäß Fig. 10 bis 17 erstreckt sich jeder Federarm 34 geradlinig oder auch leicht gekrümmt vom äußeren Endbereich des Beschriftungsträgers 10 schräg in Richtung einer Trägermitte. Dabei ist jeder Federarm einendig, insbesondere im äußeren Endbereich, mit dem Basisabschnitt 12 und anderendig, insbesondere in einem vom äußeren Endbereich beabstandeten, der Trägermitte zugewandten Bereich, mit dem Aufnahmeabschnitt 14 verbunden.

Alternativ zu den dargestellten und als bevorzugt beschriebenen einstückigen Ausführungen des Beschriftungsträgers 10 ist auch eine nicht zeichnerisch dargestellte mehrteilige Ausführung möglich, wobei der Verbindungsabschnitt optional aus mindestens einem gesonderten, insbesondere metallischen Federelement bestehen kann. Die übrigen Bestandteile des Beschriftungsträgers 10 bestehen bevorzugt aus Kunststoff, der zumindest im vorderen Sichtbereich des Aufnahmeabschnitts 14 transparent ist. In dieser nicht dargestellten Alternative kann die Federcharakteristik des elastischen Verbindungsabschnitts nahezu beliebig vorgegeben werden.

Bei der ersten Ausführungsform gemäß Fig. 1 bis 9 liegt die vordere Wandung 24 des Abdeckrahmens 6 in einer zur Wandfläche parallelen Ebene. An diese Rahmenausführung ist der Beschriftungsträger 10 entsprechend angepasst, indem der Basisabschnitt 12 bezüglich seiner Montagefläche 12a und der Aufnahmeabschnitt 14 bezüglich seiner Beschriftungsschild-Ebene bzw. bezüglich seiner vorderen Sichtwandung in Anpassung an die Ausführung des Abdeckrahmens 6 ebenfalls parallel zueinander ausgerichtet sind.

Bei der in Fig. 10 bis 13 dargestellten Alternative, wobei der Abdeckrahmen 6 als Zweifachrahmen für eine Kombination von zwei Geräteeinsätzen 2 ausgebildet ist, verläuft die vordere Wandung 24 im äußeren Rahmen-Randbereich schräg nach außen zur Montagefläche abfallend und gegebenenfalls zusätzlich nach außen leicht konvex gekrümmt. Auch hierbei ist der Beschriftungsträger 10 an diesen Verlauf der vorderen Wandung 24 entsprechend angepasst, indem der Basisabschnitt 12 bezüglich seiner Montagefläche 12a und der Aufnahmeabschnitt 14 bezüglich seiner vorderen Sichtwandung in Anpassung an den Abdeckrahmen 6 entsprechend in einem bestimmten Winkel schräg zueinander ausgerichtet sind (siehe insbesondere die Seitenansichten in Fig. 16).

Am Beispiel der Ausführung gemäß Fig. 1 bis 9 wird jetzt ein besonderer, zweiter Erfindungsaspekt genauer erläutert. Wie sich insbesondere aus Fig. 6 bis 9 ergibt, weist bei dieser erfindungsgemäßen Ausführung des Beschriftungsträgers 10 der Aufnahmeabschnitt 14 eine in Richtung des Basisabschnitts 12 über die Länge der Streifenform hinweg überwiegend offene Schildaufnahme 38 auf. Diese Schildaufnahme 38 weist lediglich kurze seitliche Haltebereiche 40 für Endbereiche des Beschriftungsschildes 16 sowie vorzugsweise (mindestens) ein mittiges Sicherungselement 42 zum Abstützen des Beschriftungsschildes 16 gegen gewichtsbedingtes (gravitationsbedingtes) Herausfallen aus der Schildaufnahme 38 auf. Durch diese erfindungsgemäße Ausgestaltung wird durch Vermeidung enger Aufnahmespalte einer Kapillarwirkung und einem Eindringen von Feuchtigkeit effektiv entgegengewirkt. Zudem kann durch die überwiegend offene Unterbringung des Beschriftungsschildes 16 eine eventuell doch eindringende Feuchtigkeit gut wieder abtrocknen.

Alternativ zu dieser besonderen Ausgestaltung kann der Aufnahmeabschnitt 14 jedoch auch eine schlitzartige Aufnahmekammer 44 für das Beschriftungsschild 16 aufweisen, wie dies am Beispiel der zweiten Ausführung gemäß Fig. 10 bis 17 veranschaulicht ist. Dazu wird besonders auf die vergrößerten Darstellungen in Fig. 14 bis 17 verwiesen.

Abschließend sei nochmals bemerkt, dass sich die Erfindung auch auf ein Elektro-Installationsgerät mit einem als Schalter, Steckdose oder dergleichen ausgebildeten Unterputz-Geräteeinsatz 2 bezieht, wobei ein erfindungsgemäßer Beschriftungsträger 10 in einer der beschriebenen Ausgestaltungen vorgesehen ist.

Alternativ kann dieser Beschriftungsträger 10 auch einem Abdeckrahmen 6 zugeordnet, d. h. zusammen mit dem Abdeckrahmen 6 geliefert werden, weil ja der Beschriftungsträger 10 im Grunde nur in Kombination mit einem mit einem entsprechenden Sichtfenster 22 ausgestatteten Rahmen 6 sinnvoll ist. Bei der Montage kann dann auf einfache Weise der Beschriftungsträger 10 auf dem jeweiligen Geräteeinsatz 2 befestigt werden, bevor der zugehörige Rahmen 6 montiert wird.

## Patentansprüche

1. Beschriftungsträger (10) zur Anordnung zwischen einem Unterputz-Geräteeinsatz (2) und einem Sichtfenster (22) eines Wand-Abdeckrahmens (6) eines Elektro-Installationsgerätes, bestehend aus einem Basisabschnitt (12) zur Befestigung an dem Geräteeinsatz (2) und einem Aufnahmeabschnitt (14) für ein flächiges Beschriftungsschild (16),
**dadurch gekennzeichnet, dass** der Aufnahmeabschnitt (14) mit dem Basisabschnitt (12) derart über einen federelastischen Verbindungsabschnitt (32) verbunden ist, dass der Aufnahmeabschnitt (14) aus einer entspannten Ausgangsstellung gegen eine Federkraft in Richtung des Basisabschnitts (12) bewegbar ist.

2. Beschriftungsträger nach Anspruch 1,
**dadurch gekennzeichnet, dass** einerseits die entspannte Ausgangsstellung für einen maximal zu erwartenden Abstand zwischen dem Sichtfenster (22) des Abdeckrahmens (6) und dem Geräteeinsatz (2) und andererseits ein elastischer Verformungsbereich bezüglich einer gegen die Federkraft zusammengedrückten Position für einen minimal möglichen Abstand zwischen dem Sichtfenster (22) und dem Geräteeinsatz (2) ausgelegt sind.

3. Beschriftungsträger nach Anspruch 1 oder 2,
**gekennzeichnet durch** eine Ausgestaltung als einstückiges Formteil aus Kunststoff, wobei der Basisabschnitt (12) über den Verbindungsabschnitt (32) in den Aufnahmeabschnitt (14) übergeht.

4. Beschriftungsträger nach Anspruch 3,
**dadurch gekennzeichnet, dass** der Verbindungsabschnitt (32) aus zwei elastisch verformbaren Federarmen (34) besteht, die jeweils als Biegefedern ausgebildet und in Endbereichen der länglichen, streifenartigen Basis- und Aufnahmeabschnitte (12, 14) angeordnet sind.

5. Beschriftungsträger nach Anspruch 4,
**dadurch gekennzeichnet, dass** jeder Federarm (34) V- oder U-förmig mit zwei über eine Umkehrbiegung (36) verbundenen Armabschnitten (34a, 34b) ausgebildet ist, wobei die Armabschnitte (34a, b) mit den Basis- und Aufnahmeabschnitten (12, 14) insbesondere in deren äußeren Endbereichen verbunden sind.

6. Beschriftungsträger nach Anspruch 4,
**dadurch gekennzeichnet, dass** jeder Federarm (34) sich vom äußeren Endbereich des Beschriftungsträgers (10) schräg in Richtung einer Trägermitte erstreckt und einendig, insbesondere im äußeren Endbereich, mit dem Basisabschnitt (12) und anderendig, insbesondere in einem vom äußeren Endbereich beabstandeten, der Trägermitte zugewandten Bereich, mit dem Aufnahmeabschnitt (14) verbunden ist.

7. Beschriftungsträger nach Anspruch 1 oder 2,
**gekennzeichnet durch** eine mehrteilige Ausführung, wobei der Verbindungsabschnitt (32) aus mindestens einem gesonderten, insbesondere metallischen Federelement besteht.

8. Beschriftungsträger nach einem der Ansprüche 1 bis 7,
**dadurch gekennzeichnet, dass** der Basisabschnitt (12) Positioniermittel insbesondere in Form von Positionieransätzen (20) zum lagerichtigen Positionieren an dem Geräteeinsatz (2), vorzugsweise auf einem zur Wandflächenauflage vorgesehenen Tragelement (4), aufweist.

9. Beschriftungsträger nach einem der Ansprüche 1 bis 8,
**dadurch gekennzeichnet, dass** der Basisabschnitt (12) an dem Geräteeinsatz (2) bzw. auf dem Tragelement (4) mittels eines beidseitig selbstklebenden Klebestreifens (18) befestigt oder zu befestigen ist.

10. Beschriftungsträger nach einem der Ansprüche 1 bis 9,
**dadurch gekennzeichnet, dass** der Basisabschnitt (12) bezüglich seiner Montagefläche (12a) und der Aufnahmeabschnitt (14) bezüglich seiner Beschriftungsschild-Ebene in Anpassung an die jeweilige Ausführung des Abdeckrahmens (6) parallel oder in einem bestimmten Winkel schräg zueinander ausgerichtet sind.

11. Beschriftungsträger nach einem der Ansprüche 1 bis 10 oder nach dem Oberbegriff des Anspruchs 1,
**dadurch gekennzeichnet, dass** der Aufnahmeabschnitt (14) eine in Richtung des Basisabschnitts (12) überwiegend offene Schildaufnahme (38) aufweist.

12. Beschriftungsträger nach Anspruch 11,
**dadurch gekennzeichnet, dass** die Schildaufnahme (38) seitliche Haltebereiche (40) für Endbereiche des Beschriftungsschildes (16) und vorzugsweise mindestens ein mittiges Sicherungselement (42) zum Abstützen des Beschriftungsschildes (16) gegen gravitationsbedingtes Herausfallen aus der Schildaufnahme (38) aufweist.

13. Beschriftungsträger nach einem der Ansprüche 1 bis 10,
**dadurch gekennzeichnet, dass** der Aufnahmeabschnitt (14) eine schlitzartige Aufnahmekammer (44) für das Beschriftungsschild (16) aufweist.

14. Elektro-Installationsgerät mit einem als Schalter, Steckdose oder dergleichen ausgebildeten Unterputz-Geräteeinsatz (2),
**gekennzeichnet durch** einen Beschriftungsträger (10) nach einem der Ansprüche 1 bis 13.

15. Abdeckrahmen (6) für ein Elektro-Installationsgerät nach dem Oberbegriff des Anspruchs 14, mit mindestens einem in einem Rahmenbereich vorgesehenen Sichtfenster (22),
**gekennzeichnet durch** mindestens einen Beschriftungsträger (10) nach einem der Ansprüche 1 bis 13.

## Claims

1. A label holder (10) for arrangement between an in-wall device insert (2) and a viewing window (22) in a wall cover frame (6) of an electrical installation device, comprising a base portion (12) for securing to the device insert (2) and a receiving portion (14) for a flat label plate (16),
**characterised in that** the receiving portion (14) is connected to the base portion (12) by way of a resilient connection portion (32) such that the receiving portion (14) may be moved, in opposition to a spring force, from a relaxed starting position in the direction of the base portion (12).

2. A label holder according to Claim 1,
**characterised in that** on the one hand the relaxed starting position is set up for the maximum spacing that is to be expected between the viewing window (22) of the cover frame (6) and the device insert (2) and on the other hand an elastic deformation region in relation to a position which is compressed in opposition to the spring force is set up for the minimum possible spacing between the viewing window (22) and the device insert (2).

3. A label holder according to Claim 1 or 2,
**characterised by** a construction as a one-piece moulding of synthetic material, wherein the base portion (12) merges by way of the connection portion (32) into the receiving portion (14).

4. A label holder according to Claim 3, **characterised in that** the connection portion (32) comprises two elastically deformable spring arms (34) which are each in the form of bending springs and are arranged in end regions of the elongate strip-like base and receiving portions (12, 14).

5. A label holder according to Claim 4,
**characterised in that** each spring arm (34) is constructed to be V-shaped or U-shaped with two arm portions (34a, 34b), connected by way of a hairpin bend portion (36), wherein the arm portions (34a, b) are connected to the base and receiving portions (12, 14) in particular in the outer end regions thereof.

6. A label holder according to Claim 4,
**characterised in that** each spring arm (34) extends from the outer end region of the label holder (10) obliquely in the direction of a support centre and is connected at one end, in particular in the outer end region, to the base portion (12) and at the other end, in particular in a region facing the support centre and spaced from the outer end region, to the receiving portion (14).

7. A label holder according to Claim 1 or 2,
**characterised by** a multiple-part construction, wherein the connection portion (32) comprises at least one separate, in particular metal, spring element.

8. A label holder according to one of Claims 1 to 7,
**characterised in that** the base portion (12) includes positioning means, in particular in the form of positioning pegs (20), for correct positioning at the device insert (2), preferably on a support element (4) which is provided for placing against the wall surface.

9. A label holder according to one of Claims 1 to 8,
**characterised in that** the base portion (12) is secured or to be secured on the device insert (2) or on the support element (4) by means of an adhesive strip (18) which is self-adhesive on both sides.

10. A label holder according to one of Claims 1 to 9,
**characterised in that** in respect of its mounting face (12a) the base portion (12) and in respect of its label plate plane the receiving portion (14) are aligned parallel or obliquely at a certain angle to one another, in a manner adapted to the respective construction of the cover frame (6).

11. A label holder according to one of Claims 1 to 10 or the precharacterising clause of Claim 1,
**characterised in that** the receiving portion (14) has a plate receiver (38) which is predominantly open in the direction of the base portion (12).

12. A label holder according to Claim 11,
**characterised in that** the plate receiver (38) has lateral holding regions (40) for end regions of the label plate (16) and preferably at least one central securing element (42) for supporting the label plate (16) to prevent it from falling out of the plate receiver (38) under the effect of gravity.

13. A label holder according to one of Claims 1 to 10,
**characterised in that** the receiving portion (14) has a slit-like receiving chamber (44) for the label plate (16).

14. An electrical installation device having an in-wall device insert (2) constructed as a switch, electrical socket or similar,
**characterised by** a label holder (10) according to one of Claims 1 to 13.

15. A cover frame (6) for an electrical installation device according to the precharacterising clause of Claim 14, having at least one viewing window (22) provided in a frame region,
**characterised by** at least one label holder (10) according to one of Claims 1 to 13.

## Revendications

1. Support d'écriture (10) destiné à être disposé entre un bloc d'appareil (2) encastré et une fenêtre d'inspection (22) d'un cadre de recouvrement de paroi (6) d'un appareil d'installation électrique, constitué d'un segment de base (12) destiné à être fixé au niveau du bloc d'appareil (2) et d'un segment de logement (14) pour un panneau d'écriture (16) plat,
**caractérisé en ce que** le segment de logement (14) est relié au segment de base (12) par l'intermédiaire d'un segment d'assemblage élastique (32) de telle manière que le segment de logement (14) peut être déplacé depuis une position de sortie détendue contre une force de rappel dans la direction du segment de base (12).

2. Support d'écriture selon la revendication 1,
**caractérisé en ce que** d'un côté, la position de départ détendue est configurée pour une distance prévue au maximum entre la fenêtre d'inspection (22) du cadre de recouvrement (6) et le bloc d'appareil (2) et de l'autre côté, une zone de déformation élastique par rapport à une position compressée contre la force de rappel est configurée pour une distance possible minimale entre la fenêtre d'inspection (22) et le bloc d'appareil (2).

3. Support d'écriture selon la revendication 1 ou 2,
**caractérisé par** une configuration en tant que pièce moulée d'un seul tenant en matière plastique, dans lequel le segment de base (12) se transforme en un segment de logement (14) par l'intermédiaire du segment d'assemblage (32).

4. Support d'écriture selon la revendication 3,
**caractérisé en ce que** le segment d'assemblage (32) est constitué de deux bras élastiques (34) élastiquement déformables, qui sont respectivement réalisés sous la forme de ressorts spiral et sont disposés dans des zones d'extrémité des segments de base et de logement (12, 14) allongés, de type bande.

5. Support d'écriture selon la revendication 4,
**caractérisé en ce que** chaque bras élastique (34) est réalisé de manière à présenter une forme en V ou en U avec deux segments de bras (34a, 34b) reliés par l'intermédiaire d'un cintrage réversible (36), dans lequel les segments de bras (34a, b) sont reliés aux segments de base et de logement (12, 14) en particulier dans leurs zones d'extrémité extérieures.

6. Support d'écriture selon la revendication 4,
**caractérisé en ce que** chaque bras élastique (34) s'étend depuis la zone d'extrémité extérieure du support d'écriture (10) de manière oblique dans la direction d'un centre de support et est relié du côté d'une extrémité, en particulier dans la zone d'extrémité extérieure, au segment de base (12) et du côté de l'autre extrémité, en particulier dans une zone tenue à distance de la zone d'extrémité extérieure, tournée vers le centre de support au segment de logement (14).

7. Support d'écriture selon la revendication 1 ou 2,
**caractérisé par** une réalisation en plusieurs parties, dans lequel le segment d'assemblage (32) est constitué d'au moins un élément de ressort séparé, en particulier d'un élément de ressort métallique.

8. Support d'écriture selon l'une quelconque des revendications 1 à 7, **caractérisé en ce que** le segment de base (12) présente des moyens de positionnement, en particulier sous la forme d'appendices de positionnement (20) permettant un positionnement dans une position correcte, au niveau du bloc d'appareil (2), de préférence sur un élément de support (4) destiné à venir en appui contre les surfaces de paroi.

9. Support d'écriture selon l'une quelconque des revendications 1 à 8, **caractérisé en ce que** le segment de base (12) est fixé ou est à fixer au niveau du bloc d'appareil (2) ou sur l'élément de support (4) au moyen d'une bande collante (18) autocollante des deux côtés.

10. Support d'écriture selon l'une quelconque des revendications 1 à 9, **caractérisé en ce que** le segment de base (12) par rapport à sa face de montage (12a) et le segment de logement (14) par rapport à son plan de panneau d'écriture sont orientés de manière à s'adapter à la réalisation respective du cadre de recouvrement (6), de manière parallèle ou de manière inclinée l'un par rapport à l'autre selon un angle défini.

11. Support d'écriture selon l'une quelconque des revendications 1 à 10 ou selon le préambule de la revendication 1,
**caractérisé en ce que** le segment de logement (14) présente un logement de panneau (38) majoritairement ouvert dans la direction du segment de base (12).

12. Support d'écriture selon la revendication 11,
**caractérisé en ce que** le logement de panneau (38) présente des zones de maintien (40) latérales pour des zones d'extrémité du panneau d'écriture (16) et de préférence au moins un élément de sécurité central (42) servant à soutenir le panneau d'écriture (16) contre toute chute hors du logement de panneau (38) du fait de la gravitation.

13. Support d'écriture selon l'une quelconque des revendications 1 à 10, **caractérisé en ce que** le segment de logement (14) présente une chambre de logement (44) à la manière d'une fente pour le panneau d'écriture (16).

14. Appareil d'installation électrique comportant un bloc d'appareil encastré (2) réalisé sous la forme d'un commutateur, d'une prise ou similaire, **caractérisé par** un support d'écriture (10) selon l'une quelconque des revendications 1 à 13.

15. Cadre de recouvrement (6) pour un appareil d'installation électrique selon le préambule de la revendication 14, comprenant au moins une fenêtre d'inspection (22) prévue dans une zone cadre ;
**caractérisé par** au moins un support d'écriture (10) selon l'une quelconque des revendications 1 à 13.
